# EUROPÄISCHE PATENTSCHRIFT

(11) **EP 1 811 850 B1**
(45) Veröffentlichungstag und Bekanntmachung des Hinweises auf die Patenterteilung: **23.12.2015**
(21) Anmeldenummer: 05786108.0
(22) Anmeldetag: 17.09.2005
(51) Int. Cl.: A22C 7/00, A22C 17/00

(54) **VERFAHREN ZUM HERSTELLEN VON FLEISCHPORTIONEN**
METHOD FOR PRODUCING PORTIONS OF MEAT
PROCEDE DE PRODUCTION DE PORTIONS DE VIANDE

(30) Priorität: 16.11.2004 DE 102004055345
(43) Veröffentlichungstag der Anmeldung: 01.08.2007
(73) Patentinhaber: Nienstedt GmbH, 45721 Haltern (DE)
(72) Erfinder: GRONEBERG-NIENSTEDT, Petra, 45721 Haltern (DE); ROSENBERGER, Jörg, 48734 Reken (DE)
(74) Vertreter: Bungartz, Klaus Peter
(86) Internationale Anmeldenummer: PCT/EP2005/010059
(87) Internationale Veröffentlichungsnummer: WO 2006/053601

(56) Entgegenhaltungen:
- EP-A- 0 647 409
- EP-A- 1 319 343
- EP-A- 1 470 754
- GB-A- 2 280 869

## Beschreibung

Die Erfindung betrifft ein Verfahren zum Herstellen form- und massegleicher Fleischportionen nach dem Oberbegriff des Anspruch 1.

Ein derartiges Verfahren ist aus der EP 1 319 343 A2 bekannt. Hierbei werden Muskelfleischstücke zugeschnitten, dann gewichtsnormiert in die Mulde der Form eingelegt und zu einem gerundeten Stück Muskelfleischs gepresst. Der Nachteil dieses Verfahrens besteht darin, dass verhältnismäßig teures Muskelfleisch zugeschnitten werden muss, wobei die Abschnitte dann einer weiteren Verarbeitung der Fleischindustrie zugeführt werden müssen, die in der Regel weniger werthaltige Fleischprodukte verwendet. Somit wird wertvolles Muskelfleisch in Form der Anschnitte durch Transformation in Verarbeitungslinien mit größerer Zerkleinerung der Eingangsprodukte, z.B. der Produktion von Hackfleisch, entwertet.

Hierbei wird unter dem Wort "Fleisch" nicht nur beliebiges tierisches Fleisch wie Geflügel, Rind, Schwein oder Lamm, sondern auch das Fleisch von Fisch verstanden. Die Lebensmittelindustrie wünscht Fleisch in homogenen ganzen Stücken, die sich neben Massengleichheit durch Formidentität auszeichnen. Dadurch haben diese Stücke gleichartige Dicken und Querschnitte, die automatisches Garen mit identischen Garzeiten ermöglichen. Gleichzeitig ist es von Vorteil, die Form so zu gestalten, dass die Fleischstücke beim Servieren groß wirken, das heißt einen möglichst großen Querschnitt aufweisen.

Es ist aus der GB 2 280 869 A bekannt, aus gefrorenen Blöcken, quaderförmige Fleischstücke, insbesondere Fischstücke, zu sägen und diese in gefrorenem Zustand in eine Form zu legen und dort zu pressen. Aufgrund der Quaderform ist es beim Pressen erforderlich, eine sehr starke Umformung zu erzeugen, um ein gerundetes Endstück zu erhalten, das einem natürlichen Fleischstück ähnlich sieht.

In Verbindung mit Muskelfleisch kommt es allerdings zu solch starken Verschiebungen der Muskelfasern, dass die Faserstruktur nicht genügend erhalten bleibt. Ferner ist ein Umformen problematisch wenn das Ausgangsprodukt solch große Abmessungen aufweist, dass beim Zuschneiden zu große Abfallmengen entstehen.

Aufgabe der Erfindung ist es, massegleiche Fleischportionen unterschiedlicher Ausgangsformen und -größen in massengleiche formidentische und formstabile Fleischstücke zu transformieren und hierbei die Faserstrukturen weitgehend zu erhalten, wobei anfallende Abfallmengen auf ein Minimum reduziert werden sollen.

Diese Aufgabe wird erfindungsgemäß durch ein Verfahren nach Anspruch 1 gelöst.

Insbesondere wird erfindungsgemäß ein seine natürliche Form aufweisendes einzelnes Fleischstück, an dem keine weiteren Fleischstücke haften, im gefrorenen oder nicht gefrorenen Zustand in zwei, drei oder mehr gleichgewichtige und/oder zielgewichtige Fleischportionen aufgeteilt, jede Fleischportion so weit beschnitten, bis sie ein gewünschtes Gewicht und vorzugsweise eine gewünschte Rohform (Vorform) aufweist und dann im gefrorenen Zustand in die Form gelegt und in der Form zur Endform gepresst.

Das Verfahren ermöglicht unabhängig von der Größe des Ausgangsfleischstückes und damit auch bei Fleischstücken erheblich größerer Größe und Masse die Endform insbesondere bei zweifacher oder mehrfacher Masse oder Größe Fleischportionen zu erhalten, die stets dieselbe Form und Masse und das gleiche Gewicht besitzen. Die Muskelfaserstrukturen sind weitgehend erhalten, so dass der Biss in solche Fleischstücke dem natürlicher Fleischstücke entspricht. Aufgrund der stets selben Dicken und Querschnitte sind die Garzeiten stets gleichbleibend und ferner können Formen gewählt werden, die Fleischportionen beim Servieren groß wirken lassen, das heißt sie weisen einen verhältnismäßig großen Querschnitt auf. Die Form kann prinzipiell beliebig vorgewählt werden.

Vorzugsweise wird vorgeschlagen, dass die Fleischstücke beim Einlegen in die Form eine Temperatur von -5°C bis -20°C aufweisen. Besonders vorteilhaft ist es, dass die Fleischstücke vor dem Pressen und/oder Beschneiden in Tumblern und/oder durch Einlegen in Soßen oder Marinaden oder Gewürzen oder durch Injizieren vorbehandelt werden.

Ausführungsbeispiele des erfindungsgemäßen Verfahrens werden im Folgenden näher beschrieben.

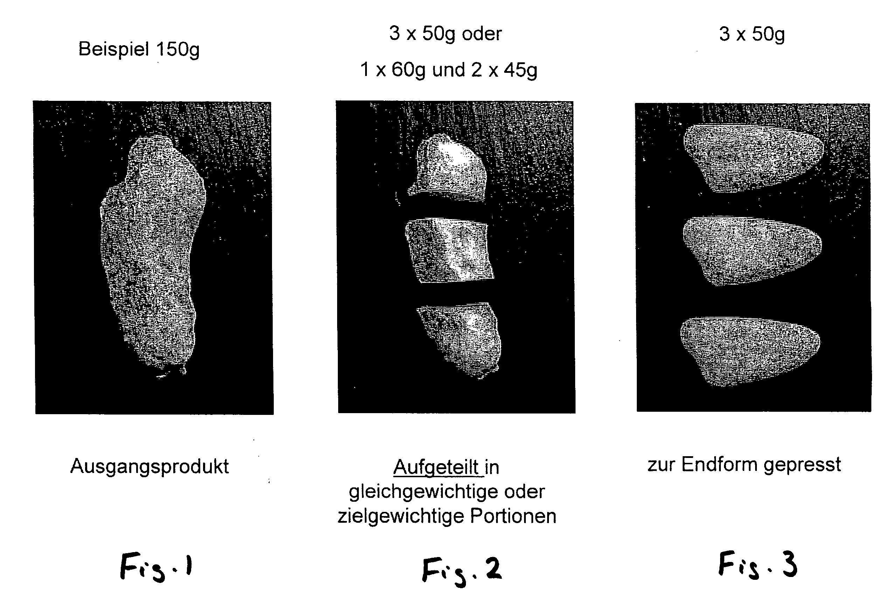

Die Abbildung zeigt in
Fig. 1 als Ausgangsprodukt ein großes Fleischstück,

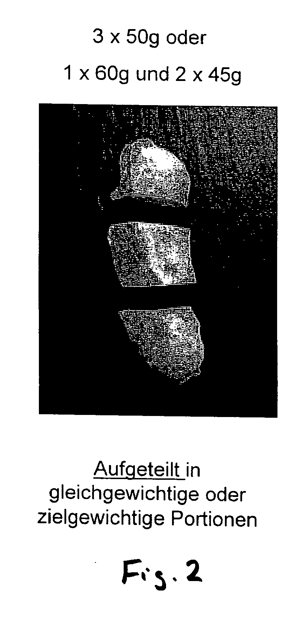

Fig. 2 das Fleischstück aufgeteilt in Fleischportionen und
Fig. 3 die Fleischportionen nach dem Pressen in ihrer Endform.

Ein großes Muskel-Fleischstück eines Tieres insbesondere von Geflügel, Rind, Schwein, Lamm oder Fisch von mindestens der zwei- oder mehrfachen Größe oder Gewicht der späteren Fleischportion wird in seiner natürlichen Form eingefroren. Unter der "natürlichen Form" wird verstanden, dass das Fleischstück nicht durch Pressen, Schneiden oder Sägen so weit verändert wurde, dass die vom Muskel vorgegebene Form nicht mehr erkennbar ist. Eine solche nicht mehr erkennbare Form wird zum Beispiel dann geschaffen, wenn aus einem gefrorenen Fleischblock quaderförmige Stücke herausgesägt werden.

Das große Fleischstück wird je nach Größe und Gewicht in zwei, drei oder mehr gleichgewichtige Fleischportionen aufgeteilt, die dem Zielgewicht entsprechen. Das Aufteilen erfolgt im nicht gefrorenen Zustand durch Schneiden. Vorzugsweise ist aber das Fleischstück gefroren (-5 bis -20 Grad Celsius) und wird in die Fleischportionen zersägt.

Die tiefgefrorene Fleischportion wird dann in die Mulde einer Pressform gelegt, die eine größere Länge als Breite und eine geringe Höhe als Breite besitzt, wobei die Ecken abgerundet sind und ein Ende der länglichen Form eine andere Rundungsform besitzt als das gegenüberliegende Ende. Damit hat die Mulde etwa die natürliche Form eines Muskel-Fleischstückes mit leicht gewölbter Ober- und Unterseite.

Nachdem die Fleischportionen in die Form gelegt wurden, wird von oben ein Stempel in die Form gedrückt und damit auf das Fleisch ein Druck ausgeübt, der das Fleischmaterial in seinem gefrorenen Zustand so weit presst, dass das Fleischmaterial die gesamte Form ausfüllt und hierbei die Muskelfasern zueinander verschoben werden. Hierbei bleibt das Endprodukt formstabil.

Die Eingangstemperatur der Fleischportionen beträgt dabei vorzugsweise-5°C bis -20°C. Das dem Verformungsprozess unter Druckanwendung zugrunde liegende Verfahren ist an sich aus den Patentschriften DE 19806391 A1 und DE 19732206 C1 bekannt. Die Beschickung der Mulden geschieht manuell oder automatisch. Das Verfahren ist nicht von der speziellen Geometrie des Eingangsmaterials, wie dies zum Beispiel bei aus Tiefkühlblöcken gesägten Rohlingen der Fall ist, abhängig. Insbesondere ist ein spezieller Vorformungsschritt in eine Form, die der gewünschten Endform ähnlich ist, nicht erforderlich. Es ist lediglich erforderlich, dass die Fleischportionen in die der Verformung dienende Mulde in für den Prozess geeigneter Weise hineinpassen, das heißt, dass insbesondere ihr Querschnitt nicht größer als der der Mulde ist. Dies kann vorzugsweise durch geeignetes Einfrieren der Fleischportionen unter geometrischen Restriktionen (wie beispielsweise in geeigneten Behältnissen) geschehen, wobei keine Druckanwendung erforderlich sein muss. Die Eingangsware kann also unter Atmosphärendruck eingefroren werden.

Die zu verformenden Fleischportionen sind vorzugsweise ganze Stücke oder Zusammenfassungen gestückelter Ware. Sie können unbehandelt oder zubereitet (zum Beispiel gewürzt, mariniert, mit Lebensmittelzusatzstoffen versehen) bzw. vorbehandelt (zum Beispiel durch Injizieren, Bearbeitung in Tumblern) sein.

Bevor die Fleischportionen in die Form gelegt wird, kann es beschnitten werden, um das gewünschte Gewicht bzw. das gewünschte Volumen zu erhalten, das für die betreffende Form erforderlich ist. In der Regel handelt es sich hierbei aber nur um wenige Schnitte am Rand der Fleischportion. Im Übrigen bleibt die Fleischportion in seiner natürlichen Muskelform.

## Patentansprüche

1. Verfahren zum Herstellen form- und massegleicher Fleischportionen durch Pressen einer Fleischportion von gefrorenem Muskelfleisch in einer Mulde einer Form zu einer gerundeten Endform, bei dem ein seine natürliche Form aufweisendes Fleischstück, an dem keine weiteren Fleischstücke haften, im gefrorenen oder nicht gefrorenen Zustand mit einem gewünschten Gewicht und vorzugsweise einer gewünschten Rohform (Vorform) im gefrorenen Zustand in die Form gelegt und in der Form zur Endform gepresst wird, **dadurch gekennzeichnet, dass** zur Gewinnung der Fleischportion ein natürliches, nicht derart gepresstes oder gesägtes Muskelfleischstück, dass die vom Muskel vorgegebene Form nicht mehr erkennbar ist, mit einem Gewicht verwendet wird, dass zumindest doppelt so groß ist wie das gewünschte Gewicht der Fleischportion, wobei das Muskelfleischstück in gleichgewichtige und/oder zielgewichtige Fleischportionen mit dem gewünschten Gewicht aufgeteilt wird, die vor Einlegen in die Mulde derart geformt sind oder werden, dass ihr Querschnitt nicht größer als der Querschnitt der Mulde ist..

2. Verfahren zum Herstellen von Fleischportionen nach Anspruch 1, **dadurch gekennzeichnet, dass** die Fleischportionen beim Einlegen in die Form eine Temperatur von -5°C bis -20°C aufweisen.

3. Verfahren zum Herstellen von Fleischportionen nach einem der beiden vorhergehenden Ansprüche, **dadurch gekennzeichnet, dass** das Fleischstück oder Fleischportionen vor dem Pressen und/oder Beschneiden in Tumblern und/oder durch Einlegen in Soßen oder Marinaden oder Gewürzen oder durch Injizieren vorbehandelt werden.

4. Verfahren zum Herstellen von Fleischportionen nach einem der vorhergehenden Ansprüche, **dadurch gekennzeichnet, dass** das Fleischstück im nichtgefrorenen Zustand durch Schneiden aufgeteilt und anschließend gefroren wird.

5. Verfahren zum Herstellen von Fleischportionen nach einem der Ansprüche 1, 2 oder 3, **dadurch gekennzeichnet, dass** das Fleischstück in gefrorenem Zustand durch Sägen aufgeteilt wird.

## Claims

1. Method for producing identically shaped meat portions of identical mass through pressing a meat portion of frozen muscle meat in a depression of a mould into a rounded end shape, wherein a meat piece in its natural shape, to which no further meat pieces adhere, is placed in the mould in a frozen or unfrozen condition with a desired weight and preferably a desired raw shape (pre-shape) in its frozen condition, and pressed into the final shape in the mould, **characterised in that** a natural muscle meat piece not pressed or sawn in a way that the shape predetermined by the muscle is no longer recognisable, is used at a weight that is at least twice as great as the desired weight of the meat portion for deriving the meat portion, whereby the muscle meat piece is divided into meat portions of identical weights and/or target weight meat portions with the desired weight, which are or will be shaped in such a way prior to placing in the depression that their cross-section is not greater than the cross-section of the depression.

2. Method for producing meat portions according to claim 1, **characterised in that** the meat portions have a temperature of -5°C to -20°C when placed in the mould.

3. Method for producing meat portions according to one of the two preceding claims, **characterised in that** the meat piece or meat portion is treated in tumblers and/or through marinating in sauces or marinades or spices, or pre-treated through injecting, prior to pressing and/ or trimming.

4. Method for producing meat portions according to one of the preceding claims, **characterised in that** the meat piece is divided through cutting in a non-frozen condition and is subsequently frozen.

5. Method for producing meat portions according to one of the claims 1, 2, or 3, **characterised in that** the meat piece is divided through sawing in a frozen condition.

## Revendications

1. Procédé pour la fabrication de portions de viande de forme et de masse identiques par compression d'une portion de viande composée de viande musculaire congelée dans une auge à partir d'une forme en une forme finale arrondie, procédé pendant lequel un morceau de viande se présente sous une forme naturelle auquel aucun autre morceau de viande n'adhère, placé dans le moule à l'état congelé ou non avec un poids souhaité et de préférence avec une forme brute (préforme) à l'état congelé et pressé dans cette forme pour obtenir une forme finale, **caractérisé en ce que**
un morceau de viande musculaire naturel pressé ou scié de telle sorte que la forme prédéterminée par le muscle ne se distingue plus est produit à partir de la portion de viande, est utilisé avec un poids au moins deux fois plus élevé que le poids de la portion de viande souhaité, le morceau de viande musculaire étant divisé dans des portions de viande de poids similaire et/ou de poids cible au poids souhaité, lesdites portions sont ou seront moulées avant d'être posées dans l'auge de telle sorte que leur section ne dépasse pas la section de l'auge.

2. Procédé pour la fabrication de portions de viande selon la revendication 1, **caractérisé en ce que** les portions de viande présentent une température comprise entre -5 °C à -20 °C en les posant dans le moule.

3. Procédé pour la fabrication de portions de viande selon l'une des deux revendications précédentes, **caractérisé en ce que** le morceau de viande ou les portions de viande sont préconditionnés avant d'être moulés et/ou découpés dans des tumbles et/ou macérés dans des sauces, marinades ou herbes ou par injection.

4. Procédé pour la fabrication de portions de viande selon l'une des revendications précédentes, **caractérisé en ce que** le morceau de viande est découpé à l'état non congelé puis congelé.

5. Procédé pour la fabrication de portions de viande selon l'une des revendication 1, 2 ou 3, **caractérisé en ce que** le morceau de viande est divisé par sciage à l'état congelé.
